# EUROPEAN PATENT APPLICATION

(11) **EP 2 296 135 A1**
(43) Date of publication of application: **16.03.2011**
(21) Application number: 09773365.3
(22) Date of filing: 18.06.2009
(51) Int. Cl.: G09G 3/34, G09G 3/20, H04M 1/00, H04M 1/02, G09G 3/36

(54) **TERMINAL DEVICE AND METHOD FOR LIGHTING BACKLIGHT OF DISPLAY THEREOF**

(30) Priority: 02.07.2008 JP 2008172858
(71) Applicant: NEC Corporation, Minato-ku Tokyo 108-8001 (JP)
(72) Inventor: SAGAWA, Rumi, Kodama-gun Saitama 367-0297 (JP)
(74) Representative: Glawe, Delfs, Moll
(86) International application number: PCT/JP2009/061540
(87) International publication number: WO 2010/001787

(57) **Abstract**

A terminal device includes a display (1) displaying information, a backlight control unit (3) controlling backlight luminance of the display, an illuminance sensor (4) detecting a surrounding brightness, an opening/closing detection unit(5) detecting opening or closing of the housing, a memory (6) storing a predetermined luminance value and a luminance correction value for illuminance, and a control unit (7) controlling the display, the backlight control unit, the illuminance sensor, the opening/closing detection unit and the memory. When the opening/closing detection unit detects the change of the state of the housing from the closed state to the open state, the control unit reads the predetermined luminance value from the memory, causes the backlight control unit to light the display backlight at that luminance value, and then causes the backlight control unit to change the luminance of the display backlight according to the surrounding brightness detected by the illuminance sensor and the luminance correction value for illuminance stored in the memory.

## Description

### Technical Field:

This invention relates to a terminal device and a backlight illumination method for display thereof, and in particular to a terminal device capable of adjusting backlight luminance and a backlight illumination method for a display of such a terminal device.

### Background Art:

An example of terminal devices relating to this invention is a portable terminal device, in which control to adjust backlight luminance of a front display is performed by detecting surrounding brightness by means of an illuminance sensor mounted on the periphery of a front display or keypad, and adjusting the backlight luminance according to the detected luminance (see Japanese Laid-Open Patent Publication No. 2001-268220 (Patent Document 1), for example).

When the measured illuminance value is relatively high (the surrounding is relatively bright), the backlight luminance is increased to ensure visibility. In contrast, when the measured illuminance value is relatively low (the surrounding is relatively dark), the backlight luminance is reduced since the visibility will not be impaired by reducing the backlight luminance. This makes it possible reduce power consumption while ensuring the visibility.

When changing the backlight luminance, the luminance is changed stepwise so that the discomfort the user may feel is reduced. In case of a foldable portable terminal device, when its housing is moved from a closed state to an open state, the backlight is changed stepwise from an OFF state up to a luminance value determined on the basis of a measured illuminance value.

The above-described Patent Document 1 discloses a technique in which the luminance of the backlight is once increased and then adjusted gradually to a predetermined luminance.

In addition, a Japanese Laid-Open Patent Publication No. 2004-140472 (Patent Document 2) discloses a portable terminal device having an illuminance sensor mounted on the rear side of the housing.

### Disclosure of the Invention:

### Problems To Be Solved by the Invention:

When a housing of a related foldable portable terminal device is moved from a closed state to an open state, a measured illuminance value directly after the detection of the open state is used in consideration of a delay before lighting of the backlight when the housing is opened. However, the measured illuminance value directly after the housing is opened is often a small value even in a relatively bright environment because the illuminance sensor cannot receive light sufficiently due to the position it is mounted.

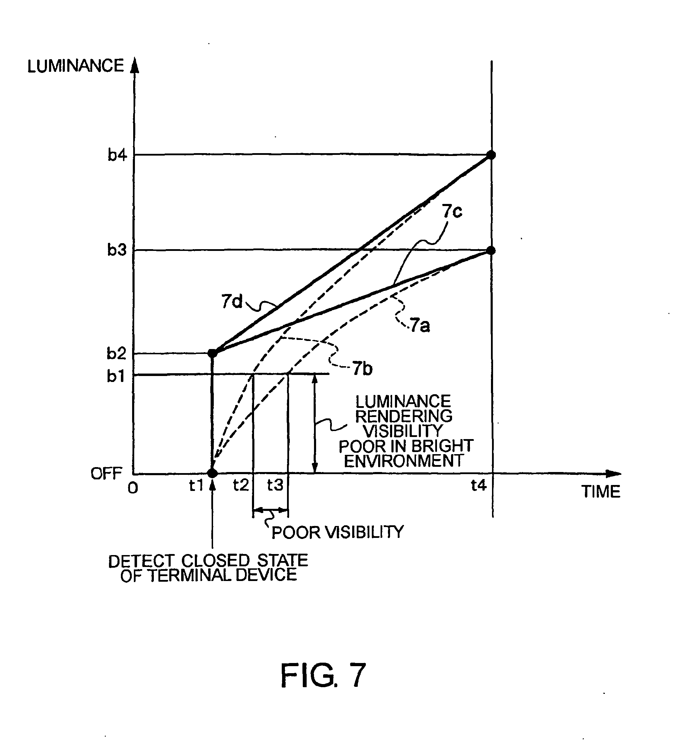

Fig. 7 is a diagram showing an example of variation in backlight luminance when a housing is moved from a closed state to an open state. In this figure the vertical indicates luminance, while the horizontal axis indicates time. When the housing of a related foldable portable terminal device is open, the variation in backlight luminance assumes characteristics as indicated by "7a: luminance transition of relevant device" in Fig. 7 when a measured illuminance value is relatively small (when it is relatively dark), whereas when a measured illuminance value is relatively large (when it is relatively bright), the variation assumes characteristics as indicated by "7b: luminance transition of relevant device" in Fig. 7.

When viewing the variation time required to reach a luminance required to ensure visibility in a relatively bright environment, the required time is t3 when the measured illuminance value is relatively small (characteristics of "7a" in Fig. 7), whereas the required time is t2 when the measured illuminance value is relatively large (characteristics of "7b" in Fig. 7) (t2<t3). Accordingly, when the measured illuminance value is relatively small, the variation time required to reach a luminance required to ensure visibility is much longer than when the measured illuminance value is relatively large. Therefore, there is a problem that when the housing is opened in a relatively bright environment, the user will experience poor visibility.

On the other hand, the invention disclosed in Patent Document 1 is related to a technique for controlling the backlight luminance according to a surrounding brightness, but does not consider at all the measured illuminance value directly after the housing is opened. Therefore, this prior art invention is completely different in object from the present invention, and hence different in configuration for achieving the object and in advantageous effects from the present invention.

The invention disclosed in Patent Document 2 only mentions that an illuminance sensor is arranged on the rear side of the housing, and it does not consider at all the measured illuminance value directly after the housing is opened, like the invention disclosed in Patent Document 1. Therefore the invention of Patent Document 2 is also completely different from the present invention.

In view of the above, an object of the present invention is to provide a terminal device which is capable of ensuring backlight luminance directly after the housing is opened and improving the visibility, and a backlight illumination method for a display of such a terminal device.

### Measures To Solve the Problems:

A terminal device according to this invention includes: a display for displaying information; backlight control means for controlling backlight luminance of the display; an illuminance sensor for detecting a surrounding brightness; opening/closing detection means for detecting opening/closing of a housing; a memory for storing a predetermined luminance value and a luminance correction value for illuminance; and control means for controlling the display, the backlight control means, the illuminance sensor, the opening/closing detection means and the memory. The terminal device is **characterized in that** when the opening/closing detection means detects that the state of the housing has been changed from a closed state to an open state, the control means reads the predetermined luminance value from the memory, causes the backlight control means to light the backlight of the display at this luminance value, and then causes the backlight control means to change the backlight luminance of the display according to the surrounding luminance detected by the illuminance sensor and the luminance correction value for illuminance stored in the memory.

A display backlight illumination method according to this invention is a display backlight illumination method for a terminal device including: a display for displaying information; backlight control means for controlling backlight luminance of the display; an illuminance sensor for detecting a surrounding luminance; opening/closing detection means for detecting opening/closing of a housing; a memory for storing a predetermined luminance value and a luminance correction value for illuminance; and control means for controlling the display, the backlight control means, the illuminance sensor, the opening/closing detection means and the memory. The method is characterized by including a luminance control step in which when the opening/closing detection means detects that the state of the housing has been changed from a closed state to an open state, the control means reads the predetermined luminance value from the memory, causes the backlight control means to light the backlight of the display at this luminance value, and then causes the backlight control means to change the backlight luminance of the display according to the surrounding brightness detected by the illuminance sensor and the luminance correction value for illuminance stored in the memory.

A program according to this invention is a program for executing a display backlight illumination method for a terminal device comprising: a display for displaying information; backlight control means for controlling backlight luminance of the display; an illuminance sensor for detecting a surrounding brightness; opening/closing detection means for detecting opening/closing of a housing; a memory for storing a predetermined luminance value and a luminance correction value for illuminance; and control means for controlling the display, the backlight control means, the illuminance sensor, the opening/closing detection means and the memory. The program is characterized by causing the control means to execute a luminance control step in which when the opening/closing detection means detects that the state of the housing has been changed from a closed state to an open state, the control means reads the predetermined luminance value from the memory, causes the backlight control means to light the backlight of the display at this luminance value, and then causes the backlight control means to change the backlight luminance of the display according to the surrounding brightness detected by the illuminance sensor and the luminance correction value for illuminance stored in the memory.

### Advantageous Effects of the Invention:

This invention makes it possible to ensure luminance of the backlight directly after the housing is opened and to improve the visibility.

### Brief Description of the Drawings:

Fig. 1 is a block diagram showing an example of a terminal device according to this invention for explaining the principle of operation of the terminal device;
Fig. 2 is a block diagram showing a first embodiment of a terminal device according to this invention;
Fig. 3 is an external view of an example of a terminal device according to this invention;
Fig. 4 is an external view of an example of a terminal device according to this invention;
Fig. 5A is a diagram showing an example of a predetermined luminance value stored in a memory 6;
Fig. 5B is a diagram showing an example of luminance correction values stored in the memory 6 with respect to illuminance values;
Fig. 6 is a flowchart showing operation of the first embodiment;
Fig. 7 is a diagram showing an example of variation of backlight luminance when the housing is moved from a closed state to and open state;
Fig. 8 is a diagram showing an example of setting predetermined luminance values in a second embodiment of this invention;
Fig. 9 is a graph showing a relation between luminance and time in a third embodiment of this invention;
Fig. 10 is a graph showing a relation between luminance and time in a fourth embodiment of this invention; and
Fig. 11 is an external view showing an example of a terminal device according to a fifth embodiment of this invention.

### Best Mode for Embodying the Invention:

Before starting description of exemplary embodiments of this invention, description will be made of the principle of operation of this invention.

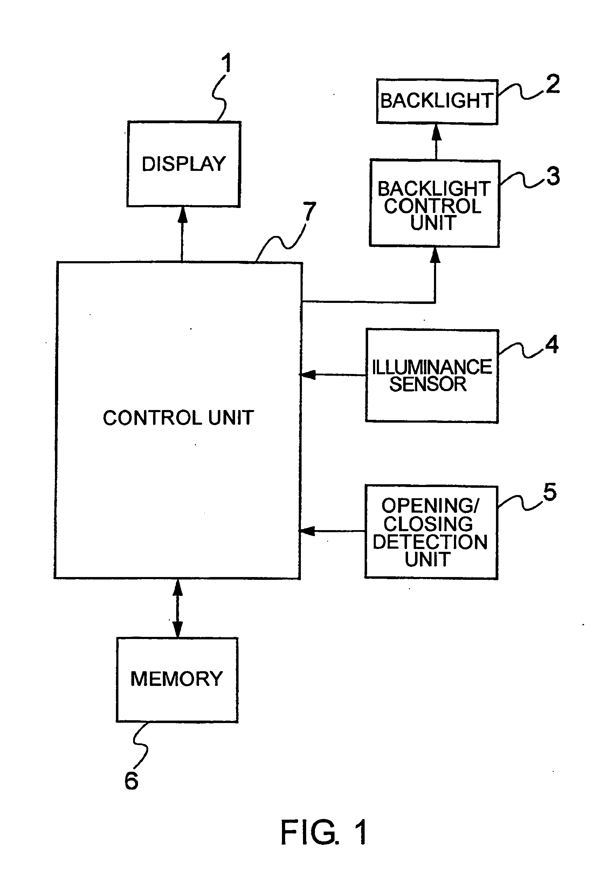

Fig. 1 is a block diagram showing an example of a terminal device according to this invention for explaining the principle of operation of the terminal device. Referring to Fig. 1, the terminal device according to the invention includes a display 1 for displaying information, and a backlight control unit 3 for controlling luminance of a backlight 2 of the display 1.

The terminal device according to this invention further includes an illuminance sensor 4 for detecting a surrounding brightness, an opening/closing detection unit 5 for detecting opening/closing of the housing, and a memory 6 for storing predetermined luminance values and luminance correction values for illuminance. Further, the terminal device according to this invention includes a control unit 7 for controlling the display 1, the backlight control unit 3, the illuminance sensor 4, the opening/closing detection unit 5 and the memory 6.

Upon detecting the change of the housing from a closed state to an open state by means of the opening/closing detection unit 5, the control unit 7 reads a predetermined luminance value from the memory 6 and causes the backlight control unit 3 to light the backlight 2 of the display 1 at that luminance value. After that, the control unit 7 causes the backlight control unit 3 to change the luminance of the backlight 2 of the display 1 according to the surrounding brightness detected by the illuminance sensor 4 and the luminance correction values for illuminance stored in the memory 6.

Thus, according to this invention, the backlight 2 is lit at a predetermined luminance value directly after the housing is opened, and then the luminance of the backlight 2 is varied according to surrounding brightness and a luminance correction value for illuminance. Therefore, the visibility can be improved continuously directly after the housing is opened.

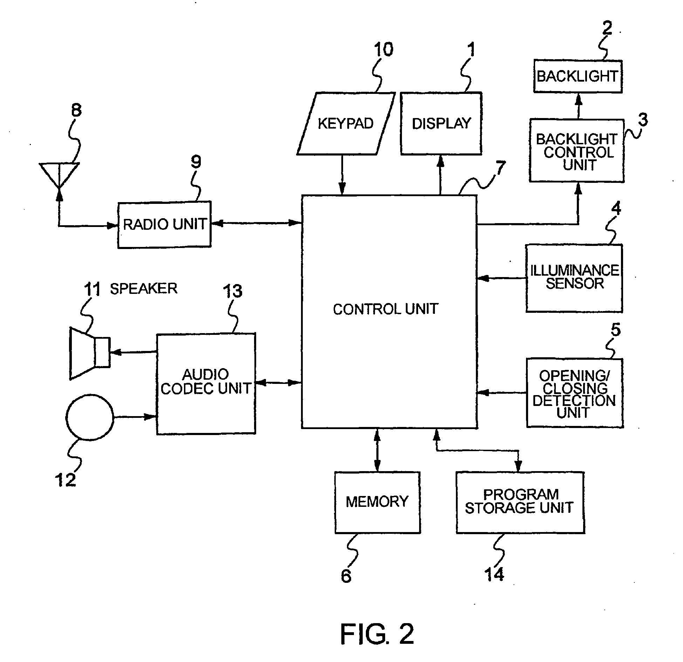

Exemplary embodiments of this invention will be described. A first embodiment will be described in the first place. Fig. 2 is a block diagram showing a first embodiment of a terminal device according to this invention. In Fig. 2, like components are denoted by the same reference numeral as those of Fig. 1 and description thereof will be omitted.

The terminal device according to this invention is a foldable portable terminal device, for example. However, this invention is not limited to this, but also applicable to any other mobile or fixed communication device as long as it is a foldable terminal device.

Referring to Fig. 2, the terminal device according to this invention includes an antenna 8, a radio unit 9, a speaker 11, microphone 12, audio codec unit 13, a keypad 10, and a display 1. The terminal device according to this invention further includes a backlight 2, a backlight control unit 3, an illuminance sensor 4, an opening/closing detection unit 5, a program storage unit 14, a memory 6, and a control unit 7.

The control unit 7 controls the radio unit 9, the audio codec unit 13, the memory 6, the program storage unit 14, the opening/closing detection unit 5, the illuminance sensor 4, the backlight control unit 3, the display 1 and the keypad 10.

The terminal device according to this invention performs communication with a base station (not shown) via the radio unit 9 and the antenna 8 under the control of the control unit 7. The radio unit 9 receives a signal via the antenna 8, selects a signal frequency to perform frequency conversion, and outputs the received data to the control unit 7 after amplifying and demodulating the same.

The control unit 7 processes the received data and outputs an audio signal to the audio codec unit 13. The audio codec unit 13 converts the audio signal to an analog signal. Then, the speaker 11 outputs sound. The sound input via the microphone 12 is A/D (analog to digital) converted into a PCM (pulse code moderation) signal in the audio codec unit 13, and the control unit 7 processes this signal into transmission data. The radio unit 9 modulates the transmission data and amplifies the same as carrier waves having a specified frequency, and the signal is transmitted from the antenna 8.

The control unit 7 performs: reading and writing of information into the memory 6; display control for the display 1; operation detection processing for the keypad 10; reading of a measured value from the illuminance sensor 4, and state change detection processing from the opening/closing detection unit 5. The illuminance sensor 4 detects a surrounding brightness. The opening/closing detection unit 5 detects opening or closing of the housing of the terminal device.

When the opening/closing detection unit 5 detects a change from the closed state to the open state in, the control unit 7 reads a predetermined luminance value from the memory 6, and sets this value in the backlight control unit 3. The backlight control unit 3 lights the backlight 2 according to the set value. The program storage unit 14 stores a program for executing a display backlight illumination method as described later. The control unit 7 retrieves the program from the program storage unit 14 and controls the components.

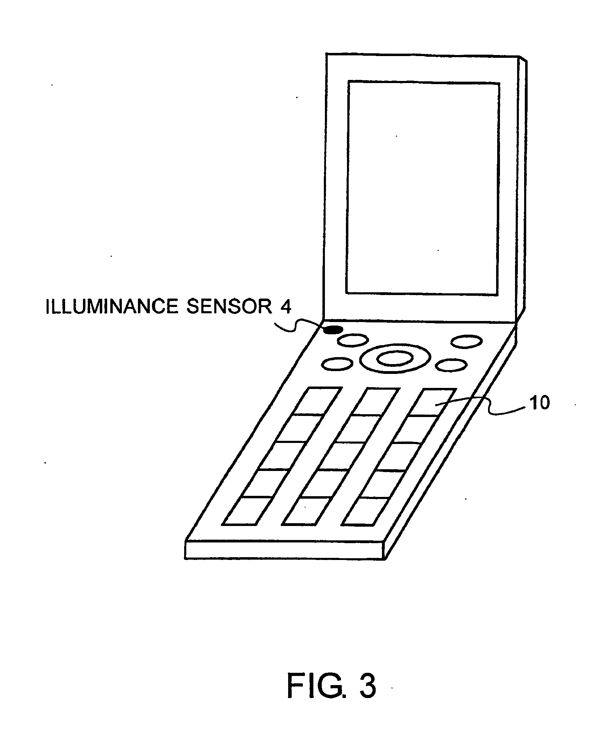

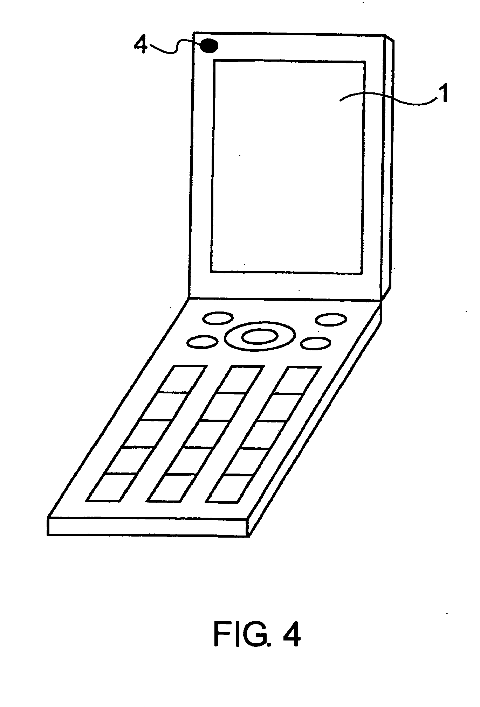

Fig. 3 and Fig. 4 are external views each showing an example of the terminal device according to this invention. Referring to these figures, the terminal device according to the invention is a terminal device having a foldable housing, and each figure shows a position where the illuminance sensor 4 is mounted. In Fig. 3, the illuminance sensor 4 is mounted on the periphery of the keypad 10 (in Fig. 3, it is mounted at the top left corner of the keypad 10, for example), while in Fig. 4, the lluminance sensor 4 is mounted on the periphery of the display 1 (in Fig. 4, it is mounted at the top left corner of the display 1, for example).

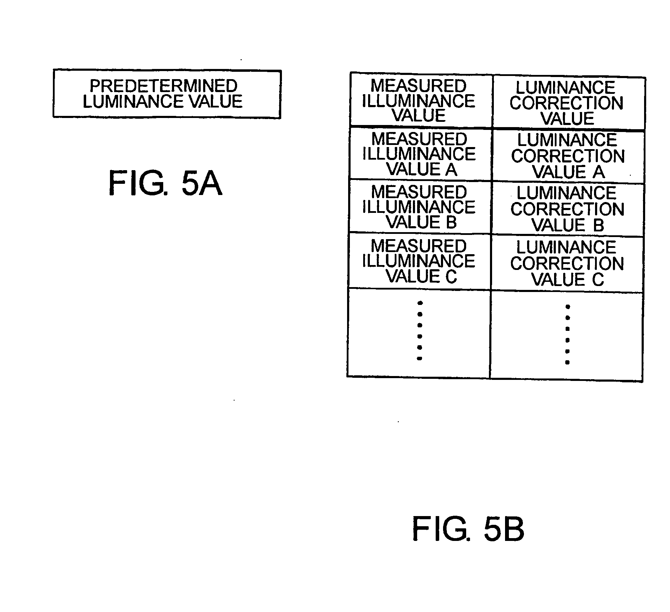

Fig. 5 is a diagram showing an example of a predetermined luminance value and luminance correction values for illuminance, stored in the memory 6. Fig. 5A shows an example of a predetermined luminance value and indicates that a single luminance value is stored in the memory 6. This luminance value is referred to by the control unit 7 when the state of the housing of the terminal device is changed from the closed state to the open state.

Fig. 5B indicates that a plurality of measured illuminance values and luminance correction values corresponding to the respective measured illuminance values are stored in the memory 6 as a luminance correction table. This table is referred to by the control unit 7 after the state of the housing is changed from the closed state to the open state. This means that this table is a luminance correction table to be referred to when brightness control performed according to the surrounding brightness. Desirably, the predetermined luminance value and the luminance correction table are set to values determined in consideration of visibility by experiments or the like.

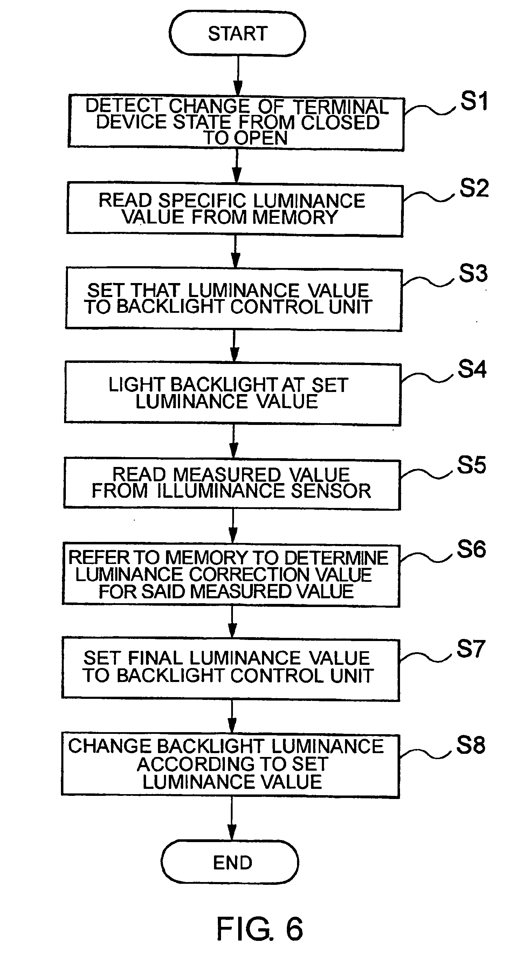

Next, operation of the first embodiment will be described. Fig. 6 is a flowchart showing operation of the first embodiment. Firstly, when the terminal device is changed from the closed state to the open state, the opening/closing detection unit 5 notifies to that effect to the control unit 7 (step S1). Upon receiving this notification, the control unit 7 reads the predetermined luminance value from the memory 6 (step S2), and sets the luminance value in the backlight control unit 3 (step S3). The backlight control unit 3 lights the backlight 2 according to the set luminance value (step S4).

The control unit 7 then reads a measured value from the illuminance sensor 4 (step S5), and reads a luminance correction value corresponding to this measured value from the memory 6 (step S6). Next, the control unit 7 adds this luminance correction value to the currently set luminance value to obtain a final luminance value, and sets this final luminance value to the backlight control unit 3 (step S7).

The backlight control unit 3 thus changes the luminance of the backlight 2 according to the set luminance value (step S8). The above-described control in steps S5 to S8 is a luminance adjustment control flow according to the surrounding brightness.

Returning to Fig. 7, luminance control according to this invention will be described. According to this invention, when the change of the state of the terminal device housing from the closed state to the open state is detected, the predetermined luminance value (the luminance value indicated by "b2" in Fig. 7) is set to the backlight control unit 3, whereby the backlight 2 is lit.

This predetermined luminance value (the luminance value indicated by "b2" in Fig. 7) is desirably determined in consideration of visibility of the display 1. In this embodiment of the invention, for example, the predetermined luminance value (the luminance value indicated by "b2" in Fig. 7) becomes larger than a luminance value at which the visibility is relatively poor in a relatively bright environment (the luminance value indicated by "b1" in Fig. 7) (i.e. b1<b2).

Then, luminance adjustment control is performed according to a measured value supplied from the illuminance sensor 4, so that when the measured illuminance value is relatively large (when it is relatively bright), for example, the luminance is gradually increased toward the luminance value (indicated by "b4" in Fig. 7) to light the backlight (see the characteristics indicated by "7d" in Fig. 7). When the measured illuminance value is relatively small (when it is relatively dark), the luminance is gradually increased toward the luminance value (indicated by "b3" in Fig. 7) to light the backlight (see the characteristics indicated by "7c" in Fig. 7).

According to the first embodiment of this invention, as described above, the terminal device has a function to adjust the backlight luminance of the display 1 according to a surrounding brightness. The backlight 2 is lit at a predetermined luminance value when the change of the state of the terminal device housing is detected from the closed state to the open state, and then the luminance is varied stepwise to a luminance value according to the surrounding brightness, whereby the backlight luminance directly after the opening of the terminal device housing is ensured and the visibility is improved.

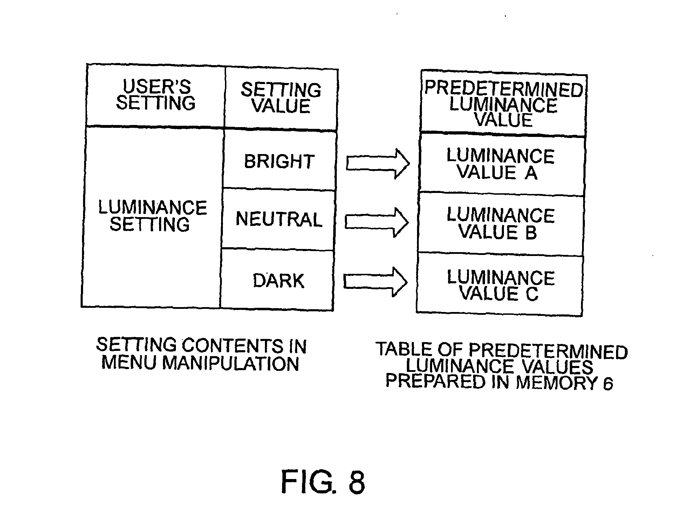

Next, a second embodiment of this invention will be described. Fig. 8 is a diagram showing a setting example of predetermined luminance values in the second embodiment of the invention. In the first embodiment described above, only one predetermined luminance value (see "b2" in Fig. 7) is prepared.

On the other hand, in this second embodiment as shown in Fig. 8, predetermined luminance values are prepared in a number corresponding to the number of levels of brightness allowed for the user to designate by menu manipulation (for example, three different predetermined luminance values are prepared for three different brightness levels: "luminance value A" for when the surrounding is relatively "bright", "luminance value B" for when "neutral", and "luminance value C" for when relatively "dark"). Accordingly, information of these brightness setting values and the luminance values corresponding thereto is stored in the memory 6.

According to the second embodiment of the invention, as described above, the backlight luminance can be set according to a status of use by the user while ensuring the visibility.

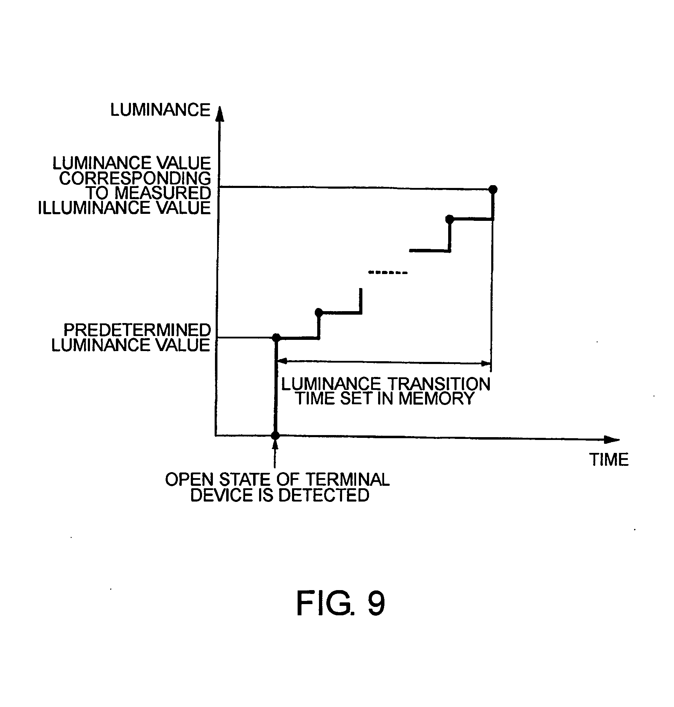

Next, a third embodiment of this invention will be described. Fig. 9 is a graph showing a relation between luminance and time in the third embodiment of this invention. In the first embodiment described above, the luminance changes linearly from the predetermined luminance value to a luminance value corresponding to a surrounding brightness (see characteristics of "7c" and "7d" in Fig. 7). In this third embodiment, as shown in Fig. 9, the change of the luminance is controlled such that the luminance transits from a predetermined luminance value to a luminance value corresponding to a surrounding brightness within a predetermined transition time. This predetermined transition time information is therefore stored in the memory 6.

According to the third embodiment of this invention as described above, the configuration is such that duration of a certain luminance value is controlled. Therefore, even if the change from a predetermined luminance value to a luminance value set according to a surrounding brightness is relatively large, the sense of discomfort the user may feel can be reduced.

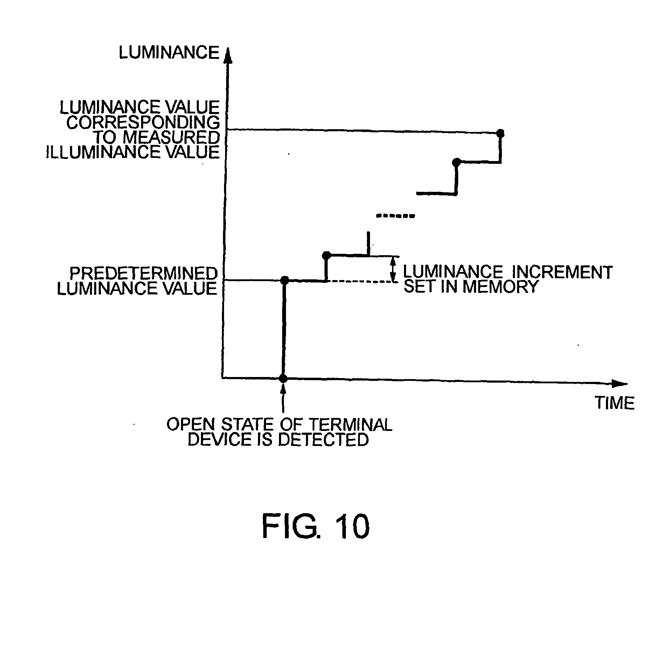

Next, a fourth embodiment of this invention will be described. Fig. 10 is a graph showing a relation between luminance and time in the fourth embodiment of this invention. In the first embodiment described above, the luminance changes linearly from a predetermined luminance value to a luminance value corresponding to a surrounding brightness (see characteristics of "7c" and "7d" in Fig. 7). In this fourth embodiment as shown in Fig. 10, control is made such that the background luminance changes from a predetermined luminance value to a luminance value corresponding to a surrounding brightness stepwise by a predetermined luminance value each time. This predetermined luminance increment information is therefore stored in the memory 6.

According to the fourth embodiment of this invention, as described above, the configuration is such that the luminance change level is controlled. Therefore, even if the change from the predetermined luminance value to the luminance setting value according to a surrounding brightness is relatively large, the sense of discomfort the user may feel can be reduced.

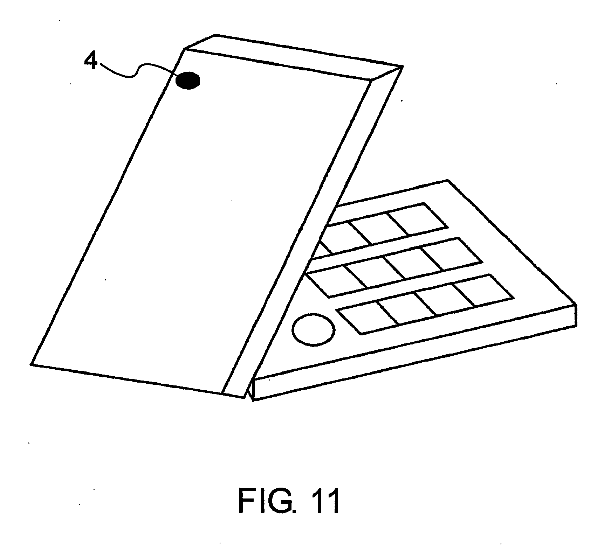

Next, a fifth embodiment of this invention will be described. Fig. 11 is an external view showing an example of a terminal device according to the fifth embodiment of this invention. Referring to Fig. 11, unlike the first embodiment described above, the illuminance sensor 4 of this fifth embodiment is mounted on the face opposite to the display 1, that is, on the face exposed outside in the state where the housing is closed. When the illuminance sensor 4 is mounted at such a position, the illuminance sensor 4 is capable of constantly detecting the surrounding brightness.

However, it is not required to adjust the luminance of the display 1 according to a surrounding brightness in the state where the terminal device housing is closed, the illuminance sensor 4 is often deactivated for the purpose of reduction of power consumption.

When the change of the housing from the closed state to the open state is detected, in the related art, a most recently measured illuminance value is used in consideration of a delay before the backlight is lit after the housing is opened. Therefore, the measured illuminance value used in this case is a value measured before the illuminance sensor is deactivated.

Accordingly, in a case where the housing is moved to the closed state in a relatively dark environment and then is opened in a relatively bright environment, the luminance is gradually increased toward a luminance value for when the measured illuminance value is relatively small. Therefore, there exists a condition in which visibility is poor for the user.

In order to solve this problem, this fifth embodiment of the invention in which the illuminance sensor 4 is mounted on the face opposite to the display 1, the backlight is lit at such a predetermined luminance value as to enable ensuring the visibility for the display 1 when the change of the housing is detected from the closed state to the open state, like the first to fourth embodiments described above, and then the luminance is changed stepwise to a luminance value corresponding to a surrounding brightness.

According to the fifth embodiment of the invention, as described above, even in a case where the illuminance sensor 4 is mounted on the face opposite to the display 1, that is on the face that is exposed outside in the state where the housing is closed, the luminance of the backlight directly after the opening of the housing can be ensured and the visibility can be improved.

Next, a sixth embodiment of this invention will be described. The sixth embodiment relates to a program for implementing a display backlight illumination method. Referring to Fig. 2, the terminal device according to this invention is provided with a program storage unit 14. There is stored, in this program storage unit 14, a program indicating a procedure of the display backlight illumination method illustrated by the flowchart of Fig. 6.

The control unit 7 retrieves this program from the program storage unit 14 and controls the opening/closing detection unit 5, the memory 6, the backlight control unit 3 and the illuminance sensor 4 in accordance with the program. The contents of the control have been described above, and hence the description thereof will be omitted here.

According to the sixth embodiment of this invention, as described above, a program can be provided capable of ensuring luminance of the backlight directly after the housing is opened and improving the visibility.

Although the invention has been described particularity based on exemplary embodiments, this invention is not limited to the embodiments described above but may be modified in various other manners without departing from the scope of the invention. It is to be understood that all such modifications fall within the scope of the present invention.

This application is based upon and claims the benefit of priority from Japanese Patent Application No. 2008-172858, filed July 2, 2008, the disclosure of which is incorporated herein in its entirety by reference.

## Claims

1. A terminal device, comprising:
a display for displaying information;
backlight control means for controlling backlight luminance of the display;
an illuminance sensor for detecting a surrounding brightness;
opening/closing detection means for detecting opening/closing of a housing;
a memory for storing a predetermined luminance value and a luminance correction value for illuminance; and
control means for controlling the display, the backlight control means, the illuminance sensor, the opening/closing detection means and the memory,
wherein, when the opening/closing detection means detects that a state of the housing is changed from a closed state to an open state, the control means reads the predetermined luminance value from the memory, causes the backlight control means to light the backlight of the display at the luminance value, and then causes the backlight control means to change the backlight luminance of the display in accordance with the surrounding brightness detected by the illuminance sensor and the luminance correction value for the illuminance stored in the memory.

2. The terminal device as claimed in claim 1, wherein the predetermined luminance value stored in the memory is determined in consideration of visibility of the display.

3. The terminal device as claimed in claim 1 or 2, wherein the predetermined luminance value stored in the memory is prepared in plurality, and the control means selects any one of the plurality of luminance values.

4. The terminal device as claimed in any one of claims 1 to 3, wherein the control means changes the luminance stepwise at intervals of a predetermined period of time from the predetermined luminance value to the luminance value corresponding to the surrounding brightness.

5. The terminal device as claimed in any one of claims 1 to 3, wherein the control means changes the luminance stepwise by a predetermined luminance value each time from the predetermined luminance value to the luminance value corresponding to the surrounding brightness.

6. The terminal device as claimed in any one of claims 1 to 5, wherein the illuminance sensor is provided on a face of the housing that is exposed outside in a state where the housing is closed.

7. A display backlight illumination method for a terminal device:
a terminal device comprising;
a display for displaying information;
backlight control means for controlling backlight luminance of the display;
an illuminance sensor for detecting a surrounding brightness;
opening/closing detection means for detecting opening/closing of a housing;
a memory for storing a predetermined luminance value and a luminance correction value for illuminance; and
control means for controlling the display, the backlight control means, the illuminance sensor, the opening/closing detection means and the memory,
the method, comprising;
a luminance control step in which when the opening/closing detection means detects that a state of the housing is changed from a closed state to an open state, the control means reads the predetermined luminance value from the memory, causes the backlight control means to light the backlight of the display at the luminance value, and then causes the backlight control means to change the backlight luminance of the display in accordance with the surrounding brightness detected by the illuminance sensor and the luminance correction value for the illuminance stored in the memory.

8. The display backlight illumination method as claimed in claim 7, wherein the predetermined luminance value stored in the memory is determined in consideration of visibility of the display.

9. The display backlight illumination method as claimed in claim 7 or 8, wherein the predetermined luminance value stored in the memory is prepared in plurality, and the control means selects one of the plurality of luminance values.

10. The display backlight illumination method as claimed in any one of claims 7 to 9, wherein the control means changes the luminance stepwise at intervals of a predetermined period of time from the predetermined luminance value to the luminance value corresponding to the surrounding brightness.

11. The display backlight illumination method as claimed in any one of claims 7 to 9, wherein the control means changes the luminance stepwise by a predetermined luminance value each time from the predetermined luminance value to the luminance value corresponding to the surrounding brightness.

12. The display backlight illumination method as claimed in any one of claims 7 to 11, wherein the illuminance sensor is provided on a face of the housing that is exposed outside in a state where the housing is closed.

13. A program for executing a display backlight illumination method for a terminal device:
the terminal device comprising;
a display for displaying information;
backlight control means for controlling backlight luminance of the display;
an illuminance sensor for detecting a surrounding brightness;
opening/closing detection means for detecting opening/closing of a housing;
a memory for storing a predetermined luminance value and a luminance correction value for illuminance; and
control means for controlling the display, the backlight control means, the illuminance sensor, the opening/closing detection means and the memory,
wherein the program is for causing the control means to execute a luminance control step in which when the opening/closing detection means detects that a state of the housing is changed from a closed state to an open state, the control means reads the predetermined luminance value from the memory, causes the backlight control means to light the backlight of the display at this luminance value, and then causes the backlight control means to change the backlight luminance of the display in accordance with the surrounding brightness detected by the illuminance sensor and the luminance correction value for illuminance stored in the memory.
